# FASCICULE DE BREVET EUROPEEN

(11) **EP 0 662 890 B1**
(45) Date de publication et mention de la délivrance du brevet: **21.02.1996**
(21) Numéro de dépôt: 93919437.9
(22) Date de dépôt: 10.09.1993
(51) Int. Cl.: B60T 7/12, B60T 13/569

(54) **DISPOSITIF DE SERVOMOTEUR A DEPRESSION D'ASSISTANCE AU FREINAGE D'UN VEHICULE MUNI DE MOYENS DE COMMANDE DIRECTE DE FREINAGE**
UNTERDRUCK-BREMSKRAFTVERSTÄRKER MIT MITTELN ZUR DIREKTEN BREMSBETÄTIGUNG
BRAKING SYSTEM WITH A VACUUM-TYPE BRAKE SERVO FOR A VEHICLE HAVING DIRECT BRAKING CONTROL MEANS

(30) Priorité: 07.10.1992 FR 9211865
(43) Date de publication de la demande: 19.07.1995
(73) Titulaire: ALLIEDSIGNAL EUROPE SERVICES TECHNIQUES, F-93700 Drancy (FR)
(72) Inventeur: CASTEL, Phillippe, F-75005 Paris (FR); PRESSACO, Pierre, F-95120 La Courneuve (FR)
(74) Mandataire: Bentz, Jean-Paul
(86) Numéro de dépôt international: FR9300866
(87) Numéro de publication internationale: WO9407716

(56) Documents cités:
- EP-A- 0 171 585
- EP-A- 0 303 470
- EP-A- 0 347 583
- WO-A-90/00126

## Description

La présente invention a pour objet un dispositif de servomoteur à dépression d'assistance au freinage d'un véhicule muni de moyens de commande directe de freinage comprenant : une enceinte fermée ; un diaphragme déformable séparant la dite enceinte en une première chambre et en une deuxième chambre reliée à une première source de pression délivrant une première pression ; un organe formant piston solidaire de la partie centrale dudit diaphragme et portant un disque de réaction ; un organe mobile de commande de freinage au pied ; des moyens de mise en communication portés par l'organe formant piston et propres à mettre la première chambre sélectivement en communication avec la première source de pression ou avec une seconde source de pression délivrant une deuxième pression supérieure à ladite première pression, selon la position dudit organe de commande de freinage au pied ; des moyens de détection de paramètres pour lesquels un freinage direct doit être commandé ; des moyens formant cloison solidaires dudit organe formant piston pour définir avec celui-ci une troisième chambre, lesdits moyens formant cloison isolant ladite seconde chambre des moyens de mise en communication ; et des moyens pour relier sélectivement ladite troisième chambre à la première ou à la seconde source de pression en réponse à un signal délivré par lesdits moyens de détection.

L'utilisation d'un servomoteur interposé entre la pédale de freinage d'un véhicule et le maître-cylindre commandant directement l'actionnement des freins, est bien connu et a pour but de réduire très sensiblement la force que doit appliquer l'automobiliste sur la pédale pour obtenir le freinage. Par ailleurs, on souhaite dans certaines circonstances munie le système de freinage de moyens qui permettent de commander l'action des freins même si l'automobiliste n'appuie pas sur la pédale de freinage. C'est par exemple le cas lorsqu'un véhicule se déplace sur une pente en descente de fort pourcentage ou éventuellement dans d'autres circonstances. Ces systèmes comportent un détecteur ou plusieurs détecteurs de paramètres de fonctionnement ou d'attitude du véhicule qui commandent directement l'action des freins. Ces systèmes sont connues sous les terminologies anglo-saxonnes "Hill holder" ou "Traction control". Dans le présent texte, l'expression "moyens de commande directe" recouvre ces différents systèmes.

Des systèmes de ce type sont par exemple décrits dans les documents EP-A- 0 347 583, EP-A- 0 171 585, et EP-A- 0 303 470.

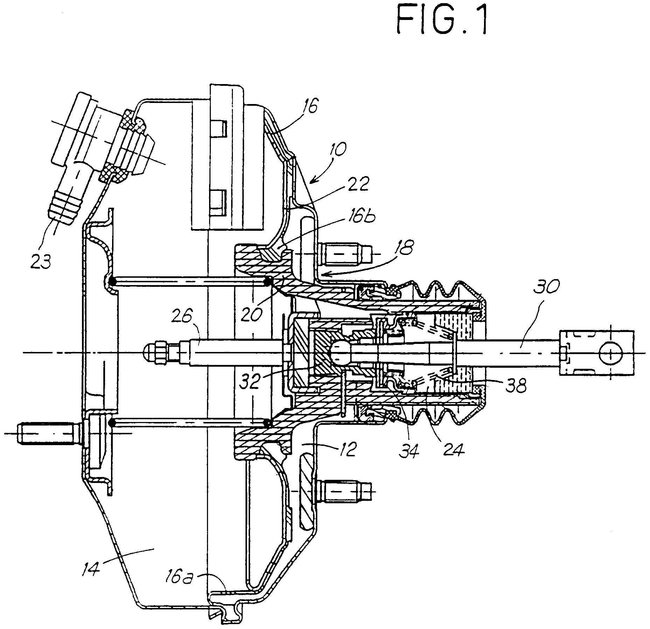

Quelle que soit leur efficacité, les solutions illustrées dans ces documents présentent l'inconvénient de nécessiter une modification sensible du piston, et notamment du corps de piston, par rapport à la configuration classique telle que représenté sur la figure 1, voire un piston totalement spécifique, afin de permettre l'application directe de la pression atmosphérique dans la chambre arrière sous l'effet de la commande directe.

Une telle nécessité rend délicate la mise en place de ce système sur des véhicules de série, en particulier si elle implique un grand nombre de pièces spécifiques pour la réalisation du servomoteur, pièces qui imposent en outre une homologation particulière.

Dans ce contexte, un objet de la présente invention est de fournir un dispositif de servomoteur pour l'assistance au freinage qui comporte des moyens de commande directe du freinage dans lequel les différentes pièces du servomoteur classique peuvent être conservées.

Pour atteindre ce but, selon l'invention, le dispositif de servomoteur à dépression d'assistance au freinage tel que défini dans le préambule est essentiellement caractérisé en ce que ledit organe formant piston comprend une jupe et une partie centrale comportant lesdits moyens de mise en communication, et en ce que lesdits moyens formant cloison comprennent une pièce dont la périphérie est solidaire de façon étanche de ladite jupe, ladite troisième chambre étant formée entre ladite pièce d'une part, et ladite jupe et ladite partie centrale d'autre part.

On comprend donc que, grâce à l'invention, on part d'une structure de servomoteur d'assistance au freinage de type classique à laquelle on adjoint une cloison solidaire du piston du diaphragme déformable pour réaliser la troisième chambre.

De préférence, lesdits moyens formant cloison comprennent une partie centrale cylindrique entourant le disque de réaction et assurant l'étanchéité entre lesdites deuxième et troisième chambres.

De préférence également, des moyens de mise en communication comprennent une conduite à paroi déformable traversant la deuxième chambre et dont une première extrémité est raccordée à ladite pièce formant cloison et dont l'autre extrémité débouche à l'extérieur de ladite enveloppe.

D'autres caractéristiques et avantages de la présente invention apparaîtront mieux à la lecture de la description qui suit de plusieurs modes de réalisation de l'invention donnés à titre d'exemples non limitatifs. La description se réfère aux figures annexées sur lesquelles :
- la figure 1 montre en coupe verticale un servomoteur à dépression d'assistance au freinage connu ;
- les figures 2a et 2b montrent une partie du servomoteur de la figure 1 respectivement lors de phases de freinage et au repos ;
- la figure 3 est une vue en coupe verticale d'un servomoteur à dépression muni de moyens de commande directe de freinage selon l'invention ; et
- la figure 4 montre en perspective et en coupe partielle les moyens utilisés pour réaliser la troisième chambre servant à la commande directe de freinage.

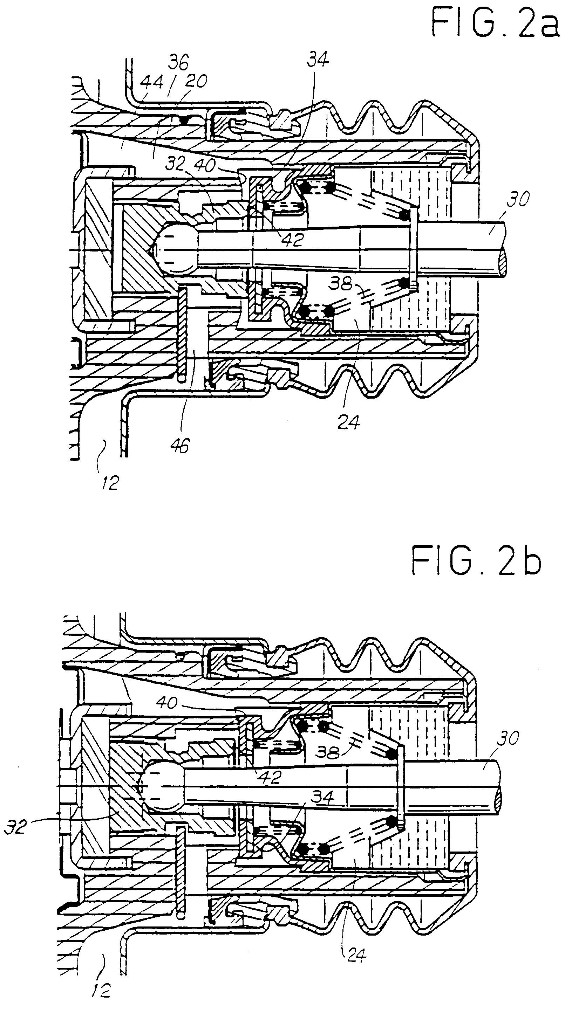

Afin de mieux comprendre les problèmes que soulève l'implantation de tels systèmes de commande directe de freinage dans une installation classique d'assistance au freinage, on va décrire brièvement en se référant aux figures 1, 2a, 2b un servomoteur d'assistance au freinage de type classique.

Comme le montre la figure 1, le servomoteur comporte une enveloppe 10 qui est séparée en une chambre arrière 12 et une chambre avant 14 par un diaphragme déformable 16. La périphérie externe du diaphragme 16, référencée 16a, est solidaire de l'enveloppe alors que sa périphérie interne 16b est solidaire d'un ensemble formant piston 18. Le piston 18 comporte un corps 20 et une jupe périphérique 22 sur laquelle s'appuie partiellement le diaphragme déformable 16. Dans la chambre avant 14, on admet en permanence par les moyens 23 une dépression prélevée au niveau du moteur. Dans la chambre avant 14, on trouve soit la dépression prélevée au niveau du moteur par mise en communication des chambres arrière 12 et avant 14, soit la pression atmosphérique par interruption de la liaison entre les deux chambres et mise en communication de la chambre arrière 12 avec une zone 24 qui est en permanence à la pression atmosphérique. On comprend bien sûr que, lorsque la chambre arrière 12 est en dépression, il n'y a pas freinage puisque les deux faces du diaphragme sont soumises à la même pression. Au contraire, lorsque la chambre arrière 12 est mise à la pression atmosphérique, la différence de pression agissant sur le diaphragme déformable et l'ensemble formant piston 18 provoque le déplacement de cet ensemble et en particulier celui de la tige de poussée 26 solidaire du piston 18. Le déplacement de la tige de poussée 26 commande la montée en pression du liquide de frein dans le maître-cylindre, non représenté sur les figures, celle-ci provoquant à son tour l'actionnement des freins.

En se référant maintenant aux figures 2a et 2b, on va expliquer plus en détails dans ces systèmes connus la façon dont on met en communication les chambres avant et arrière lors des phases de repos du servomoteur et la façon dont on met à la pression atmosphérique la chambre arrière 12 lorsqu'on veut commander un freinage.

La commande de freinage est réalisée par action sur la pédale de freinage non représentée qui transmet son déplacement à une tige de commande 30. Son extrémité est solidaire d'un distributeur plongeur 32. En outre, un clapet annulaire 34 entourant la tige de commande 30 sépare de façon étanche la zone 24 à la pression atmosphérique d'une zone avant 36. Ce clapet 34 est soumis à l'action d'un ressort de rappel 38 tendant à écarter le clapet 34 de la chambre 24. Comme le montrent les figures 2a et 2b, le corps de piston 20 définit intérieurement une première portée annulaire 40 qui petit coopérer avec le clapet 34. De même, le distributeur plongeur définit une portée annulaire 42 concentrique à la portée annulaire 40 qui peut également coopérer avec le clapet 34. Des passages 44 et 46 sont également prévus dans le corps de piston 18.

Lorsque le servomoteur est au repos, c'est-à-dire lorsqu'aucune action n'est exercée sur la tige de commande 30, le clapet 34 est en appui sur la portée 42, ce qui isole la chambre à la pression atmosphérique 24 de la chambre postérieure 12. Simultanément, le clapet 34 n'est pas en contact avec la portée annulaire 40, ce qui permet la mise en communication de la chambre arrière 12 avec la chambre avant 14 par l'intermédiaire des passages 44 et 46. C'est ce qui est montré sur la figure 2a.

Lorsqu'on agit sur la tige de commande 30 (figure 2b), le distributeur plongeur 32 est repoussé tandis que le clapet 34, sous l'effet du ressort de rappel 38, vient en appui sur la portée annulaire 40 alors que ce même clapet 34 n'est plus au contact de la portée annulaire 42. Dans cette position, la chambre 24 à la pression atmosphérique est mise en liaison avec la chambre postérieure 12 de l'enveloppe 10 du servomoteur, par quoi la chambre arrière est portée à la pression atmosphérique, ce qui entraîne le déplacement vers l'arrière du piston 18 et de la tige de commande du maître-cylindre.

Le fait d'adjoindre au servomoteur d'assistance au freinage un dispositif de commande directe de freinage signifie que l'on ajoute au système précédemment décrit des moyens pour commander l'admission de la pression atmosphérique dans la chambre arrière 12 de l'enveloppe 10 lorsque la tige de commande 30 n'est pas sollicitée par une action volontaire de l'automobiliste.

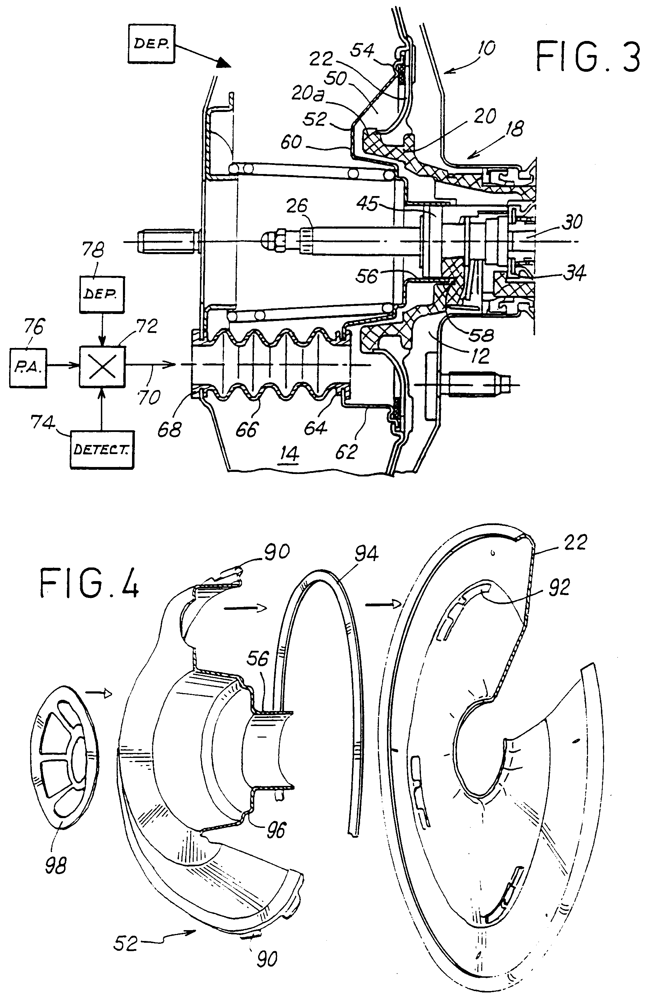

En se référant tout d'abord à la figure 3, on va décrire l'ensemble du servomoteur muni des moyens de commande directe du freinage. Comme on l'a déjà indiqué, selon une caractéristique de l'invention, on part d'un servomoteur de type classique auquel on ajoute certains composants pour permettre la mise en oeuvre de la fonction de commande directe de freinage. On a donc repris sur la figure 3 les références déjà utilisées sur les figures 1 et 2a, 2b pour désigner les différentes parties du servomoteur proprement dit. Dans la description qui suit, on explicitera seulement les parties additionnelles correspondant à la mise en oeuvre de la fonction de commande directe de freinage.

Pour réaliser la troisième chambre référencée 50 sur la figure 3, on fixe sur le piston 18 une cloison 52 réalisée de préférence en tôle emboutie. La cloison 52 comporte une partie périphérique 54 servant à sa fixation étanche sur la jupe 22 du piston et une partie centrale 56 formant une jupe cylindrique ouverte. Le rebord de la jupe 56 pénètre dans une gorge annulaire 58 ménagée dans la face avant de la partie centralé 20 du piston 18. La cloison 52 comporte une portion intermédiaire pliée 60 qui épouse en la contournant la périphérie 20a du piston. On définit ainsi, entre le piston 18 constitué par sa partie centrale et sa jupe et la cloison 52, la troisième chambre 50 qui est ainsi isolée de la chambre avant 14 et qui communique avec la chambre arrière 12 par l'intermédiaire des moyens de mise en communication, déjà décrits, et qui sont eux contrôlés par la tige de commande 30. La cloison 52 comporte en outre sur une portion de sa partie intermédiaire 60 un manchon cylindrique 62 servant à raccorder de façon étanche une première extrémité 64 d'une conduite à paroi déformable 66. La conduite 66 traverse la chambre avant 14 et sa deuxième extrémité 68 est fixée de façon étanche sur la paroi de l'enveloppe 10. La conduite à paroi déformable 66 qui est, de préférence, constituée par un soufflet permet donc de relier la troisième chambre 50 avec différentes sources de fluide comme on va l'expliquer maintenant.

La conduite déformable 66, ou plus précisément son extrémité 68, est raccordée par une conduite externe 70 à une électrovanne a trois voies 72 dont la position est commandée par le signal délivré par un ensemble de détection 74 de paramètres de fonctionnement ou d'attitude du véhicule devant entraîner la commande directe de freinage. Les différentes possibilités et les différents types de capteurs sont décrits en détail dans le brevet européen déjà mentionné. Il suffit de dire ici que, lorsque le freinage direct doit être commandé, la vanne 72 met en relation la conduite 66 avec la pression atmosphérique 76 alors que, durant toutes les autres phases de fonctionnement, l'électrovanne 72 met la conduite 66 en relation avec la dépression 78 prélevée au niveau du moteur.

Le fonctionnement de l'ensemble du dispositif découle aisément de la description précédente. Lors des phases normales de fonctionnement, c'est-à-dire lorsque la commande directe de freinage n'est pas active, la troisième chambre 50 est maintenue en dépression. Par l'intermédiaire des deuxièmes moyens de mise en communication décrits précédemment, la chambre arrière 12 du servomoteur est donc également maintenue en dépression tant que l'automobiliste n'agit pas sur la pédale de freinage, c'est-à-dire sur la tige de commande 30. Plus précisément, cette mise en communication est réalisée par les passages 44 et 46 dans le corps de piston 20 et l'espace libre entre la portée 40 et le clapet 34. Lors des opérations de freinage volontaire, la seule différence de fonctionnement par rapport à celui d'un servomoteur de type classique consiste dans le fait que les deuxièmes moyens de mise en communication mettent en communication la chambre arrière 12 avec la troisième chambre 50 au lieu de mettre en communication la chambre arrière 12 avec la chambre avant 14. En revanche, lorsque la commande de freinage doit être actionnée, la troisième chambre 50 est mise à la pression atmosphérique. Cette troisième chambre communique avec la chambre arrière 12 si l'automobiliste n'a pas commandé lui-même le freinage. Cette mise en communication est réalisée comme on l'a décrit précédemment. Si l'automobiliste a commandé le freinage, cette communication n'existe pas mais la commande volontaire de freinage a déjà mis la chambre arrière 12 en communication avec la source autonome 24 qui est à la pression atmosphérique.

La figure 4 montre plus en détail un mode préféré de réalisation de la pièce 52. La périphérie 54 de la pièce 52 est munie d'une série d'ergots 90 régulièrement répartis. Ces ergots peuvent pénétrer dans des trous 92 ménagés dans la jupe 22 du piston 18. Un joint annulaire 94 interposé entre ces deux pièces réalise l'étanchéité périphérique de la troisième chambre 50. De préférence, la partie médiane de la pièce 52 comporte un épaulement 96 apte à recevoir une coupelle 98 de retenue du disque de réaction 45.

On comprend également que la jupe cylindrique 56 de la pièce 52 sert en outre ait maintien et au guidage du disque de réaction 45 de la tige de poussée 26 ; ce faisant, l'étanchéité entre la chambre avant 14 et la troisième chambre 50 est assurée par le disque de réaction 45.

## Revendications

1. Dispositif de servomoteur à dépression d'assistance au freinage d'un véhicule muni de moyens de commande directe de freinage comprenant : une enceinte fermée (10) ; un diaphragme déformable (16) séparant ladite enceinte en une première chambre (12) et en une deuxième chambre (14) reliée à une première source de pression (78) délivrant une première pression ; un organe formant piston (18) solidaire de la partie centrale dudit diaphragme et portant un disque de réaction ; un organe mobile de commande de freinage au pied (30, 32, 34) ; des moyens de mise en communication (44, 40, 42, 46) portés par l'organe formant piston et propres à mettre la première chambre sélectivement en communication avec la première source de pression ou avec une seconde source de pression (24) délivrant une deuxième pression supérieure à ladite première pression, selon la position dudit organe de commande de freinage au pied ; des moyens de détection de paramètres (74) pour lesquels un freinage direct doit être commandé ; des moyens formant cloison (52) solidaires dudit organe formant piston (18) pour définir avec celui-ci une troisième chambre (50), lesdits moyens formant cloison isolant ladite seconde chambre des moyens de mise en communication ; et des moyens (76, 66, 68) pour relier sélectivement ladite troisième chambre à la première ou à la seconde source de pression en réponse à un signal délivré par lesdits moyens de détection, caractérisé en ce que ledit organe formant piston (18) comprend une jupe (22) et une partie centrale (20) comportant lesdits moyens de inise en communication, et en ce que lesdits moyens formant cloison comprennent une pièce (52) dont la périphérie (54) est solidaire de façon étanche de ladite jupe, ladite troisième chambre (50) étant formée entre ladite pièce d'une part, et ladite jupe et ladite partie centrale d'autre part.

2. Dispositif de servomoteur selon la revendication 1, caractérisé en ce que lesdits moyens formant cloison comprennent une partie centrale cylindrique (56) entourant le disque de réaction et assurant l'étanchéité entre lesdites deuxième et troisième chambres.

3. Dispositif de servomoteur selon la revendication 2, caractérisé en ce que lesdits moyens de mise en communication comprennent une conduite (66) à paroi déformable traversant la deuxième chambre (14) et dont une première extrémité (64) est raccordée à ladite pièce formant cloison (52) et dont l'autre extrémité (68) débouche à l'extérieur de ladite enveloppe (10).

4. Dispositif de servomoteur selon la revendication 2, caractérisé en ce que ladite pièce formant cloison (52) est fixée sur ladite jupe (22) par la coopération de fentes (92) ménagées dans une des pièces et par des ergots (90) ménagés dans l'autre pièce.

## Claims

1. Brake-booster device of partial vacuum type for a vehicle fitted with direct braking control means comprising: an enclosed space (10); a deformable diaphragm (16) separating said space into a first chamber (12) and into a second chamber (14) connected to a first pressure source (78) delivering a first pressure; a member forming a piston (18) securely attached to the central part of said diaphragm and bearing a reaction disk; a movable member for control of braking by the foot (30, 32, 34); means (44, 40, 42, 46) for placing in communication carried by the member forming a piston and capable of selectively placing the first chamber in communication with the first pressure source or with a second pressure source (24) delivering a second pressure higher than said first pressure, according to the position of said member for control of braking by the foot; means for detection of parameters (74) for which a direct braking has to be operated; means forming a partition (52) which are securely attached to said member forming a piston (18) so as to define with the latter a third chamber (50), said means forming a partition isolating said second chamber from the means for placing in communication; and means (76, 66, 68) for selectively connecting said third chamber to the first or to the second pressure source in response to a signal delivered by said detection means, characterized in that said member forming a piston (18) comprises a skirt (22) and a central part (20) comprising said means for placing in communication, and in that said means forming a partition comprise a part (52), the periphery (54) of which is securely attached in a leak-tight manner to said skirt, said third chamber (50) being formed between said part on the one hand and said skirt and said central part on the other hand.

2. Booster device according to Claim 1, characterized in that said means forming a partition comprise a cylindrical central part (56) surrounding the reaction disk and providing the leaktightness between said second and third chambers.

3. Booster device according to Claim 2, characterized in that said means for placing in communication comprise a pipe (66) with a deformable wall passing through the second chamber (14) and a first end (64) of which is connected to said part forming a partition (52) and the other end (68) of which opens to the outside of said casing (10).

4. Booster device according to Claim 2, characterized in that said part forming a partition (52) is secured on said skirt (22) by the interaction of slots (92) made in one of the parts and by catches (90) made in the other part.

## Patentansprüche

1. Unterdruck-Bremskraftverstärker für ein Fahrzeug, der mit Mitteln zur direkten Steuerung der Bremsung versehen ist, die folgendes aufweisen: ein geschlossenes Gehäuse (10); eine verformbare Membran (16), die das Gehäuse in eine erste Kammer (12) und eine zweite Kammer (14) unterteilt, die mit einer ersten Druckquelle (78) verbunden ist, die einen ersten Druck abgibt; ein einen Kolben (18) bildendes Organ, das mit dem zentralen Teil der Membran fest verbunden ist und eine Reaktionsscheibe hält; ein bewegliches Steuerorgan für die Fußbremse (30, 32, 34); Verbindungsmittel (44, 40, 42, 46), die von dem den Kolben bildenden Organ gehalten werden und dazu geeignet sind, die erste Kammer gemäß der Position des Steuerorgans für die Fußbremse selektiv in Verbindung mit der ersten Druckquelle oder einer zweiten Druckquelle (24) zu bringen, die einen zweiten Druck abgibt, der höher als der erste Druck ist; Mittel (74) zum Erfassen von Parametern, für die eine direkte Bremsung gesteuert werden soll; Mittel, die eine Trennwand (52) bilden und mit dem den Kolben (18) bildenden Organ fest verbunden sind, um mit diesem eine dritte Kammer (50) zu bilden, wobei die die Trennwand bildenden Mittel die zweite Kammer von den Verbindungsmitteln isolieren; sowie Mittel (76, 66, 68) zum selektiven Verbinden der dritten Kammer mit der ersten oder der zweiten Druckquelle in Reaktion auf ein von den Erfassungsmitteln abgegebenes Signal, dadurch gekennzeichnet, daß das den Kolben (18) bildende Organ eine Schürze (22) und einen zentralen Teil (20) aufweist, der die Verbindungsmittel aufweist, und daß die die Trennwand bildenden Mittel ein Teil (52) aufweisen, dessen Umfang (54) dicht an der Schürze befestigt ist, wobei die dritte Kammer (50) zwischen dem Teil einerseits und der Schürze und dem zentralen Teil andererseits ausgebildet ist.

2. Bremskraftverstärker nach Anspruch 1, dadurch gekennzeichnet, daß die die Trennwand bildenden Mittel einen zylindrischen zentralen Teil (56) aufweisen, der die Reaktionsscheibe umgibt und die Dichtigkeit zwischen der zweiten und der dritten Kammer gewährleistet.

3. Bremskraftverstärker nach Anspruch 2, dadurch gekennzeichnet, daß die Verbindungsmittel eine Leitung (66) mit verformbarer Wand aufweisen, die die zweite Kammer (14) durchsetzt und von der ein erstes Ende (64) an das die Trennwand (52) bildende Teil angeschlossen ist und von der das andere Ende (68) außerhalb des Gehäuses (10) mündet.

4. Bremskraftverstärker nach Anspruch 2, dadurch gekennzeichnet, daß das die Trennwand (52) bildende Teil an der Schürze (22) durch das Zusammenwirken von in einem der Teile vorgesehenen Schlitzen (92) mit in dem anderen Teil vorgesehenen Vorsprüngen (90) befestigt ist.
